# EUROPEAN PATENT APPLICATION

(11) **EP 4 807 213 A1**
(43) Date of publication of application: **16.09.2026**
(21) Application number: 26162553.7
(22) Date of filing: 05.03.2026
(51) Int. Cl.: F16H 3/54, F16H 3/66, B60K 17/04, F16H 48/24, F16H 37/04, F16H 57/00

(54) **ELECTRIC MOTOR AXLE FOR INDUSTRIAL OR COMMERCIAL VEHICLE**

(30) Priority: 10.03.2025 IT 202500004916
(71) Applicant: FPT Industrial S.p.A., 10156 Torino (IT)
(72) Inventor: PESOLA, Fabio, 10156 Torino (IT); TESSITORE, Marco, 10156 Torino (IT)
(74) Representative: Fiume, Orazio

(57) **Abstract**

Electric axle (EA) for an industrial or commercial vehicle comprising a differential (DF) provided with an input port (DFI) and half-shafts (H1, H2) for driving respective vehicle wheels (W1, W2) in rotation, a first electric machine (EMG1, EMG2) having a motor shaft (SM, SM'), a first transmission comprising: a planetary gearset (EG, EG1, EG2) parallel but not coaxial with said half-shafts (H1, H2) and comprising a single output port (OW1, OW2) operatively connected to said input port of the differential, a first input port (M1) and a second input port (M2) selectively connectable to a first hollow shaft (HS1), parallel but not coaxial with said half-shafts, wherein the first hollow shaft (HS1) is supported by a first toothed wheel (TW1, TW2) by means of a first splined coupling, wherein the first toothed wheel is directly or indirectly coupled to said first electric machine (EMG1, EMG2) and wherein said first hollow shaft is configured to selectively couple said first and second input port by means of an axial movement defined by said first splined coupling.

## Description

### Field of the Invention

The present invention relates to the field of electric propulsion systems, in particular in the context of industrial and commercial vehicles provided with a single-motor or dual-motor electric drive axle.

The electric drive axle of the present invention belongs to the category of axles known as *off-axis,* in that the axis of rotation of one or more electric propulsion machines is parallel but not coaxial with the half-shafts defining the axle.

### State of the Art

In the field of commercial and industrial vehicles a massive electrification is underway, which involves the replacement of internal combustion engines or their coupling with electric motors.

Industrial and commercial vehicles are designed to maximise load space; therefore, one of the fundamental aspects concerns the provision of compact as well as robust drive axles.

Furthermore, it must be considered that such vehicles require significant driving torques and powers, and in order to achieve such torques and powers it is necessary to provide transmissions ensuring a high transmission ratio or the use of two electric machines.

It is therefore not easy to balance compactness and a high transmission ratio or the arrangement of two electric machines and the transmission with respect to vehicle constraints.

More specifically, in the field of industrial and commercial vehicles a high axle efficiency at highway speeds is required, i.e. when there is a low reduction ratio between the shaft of the electric motors and the wheel hubs, by limiting as much as possible the number of meshing gears in this specific driving condition and therefore the losses due to torque transmission between the meshing toothed wheels.

It is further required that the controls for operating any gear change are arranged "externally", in the sense that they are easily accessible from the outside for easy and convenient maintenance.

### Summary of the Invention

The object of the present invention is to provide a single-motor or dual-motor electric drive axle for industrial or commercial vehicles that is particularly compact and capable of guaranteeing, in one operating condition, a high reduction ratio and, in another operating condition, when the reduction ratio is low, a high efficiency.

Another object of the present invention is to arrange a gear actuation control in a particularly convenient and accessible position.

The basic idea of the present invention is to implement a transmission comprising a planetary gearset acting as a two-speed gearbox, referred to in English as a "planetary gearset", wherein the planetary gearset is *off-axis* with respect to the axle, that is, parallel but not coaxial with the axle.

The planetary gearset has at least two distinct inputs and a single output operatively connected to the differential input of the axle.

A first hollow shaft has a first end selectively connectable to one of the at least two inputs of the planetary gearset by means of a first selection device.

The first hollow shaft is supported, via a splined coupling, by a first toothed wheel configured to be driven in rotation directly or indirectly by the first electric machine.

The first hollow shaft is coaxial with and internal to the first toothed wheel.

The first electric machine comprises a pinion.

The pinion and the first toothed wheel define a lay plane in which the first electric machine and the planetary gearset are both arranged in a first half-space defined by the lay plane.

The planetary gearset defines said two separate and selectively selectable inputs, wherein the first input coincides with a first sun gear and the second input coincides with the planet carrier, and wherein the output coincides with an output wheel fixed to the planet carrier. In particular, the output wheel meshes with a ring gear fixed to the differential casing which defines the differential input.

The planets of the planetary gearset, at least three, have toothing that meshes with an external ring gear fixed to the drive axle housing and with the first sun gear. According to a further preferred variant of the invention, the planetary gearset is of the "stepped" type, meaning that each planet group comprises two toothed portions fixed in rotation to each other, of which a first toothing meshes with the fixed external ring gear, as in the previous example, and with the first sun gear, while the second toothing meshes with a second sun gear arranged laterally with respect to the first.

A second hollow shaft, supported by the first hollow shaft by means of a second splined coupling, has a first end selectively connectable to the second sun gear.

Obviously, the second hollow shaft can be connected to the second sun gear only if the first hollow shaft is disconnected from both the first sun gear and the planet carrier.

Likewise, the second hollow shaft must be disconnected from the second sun gear in order to allow the first hollow shaft to be connected to one of the first sun gear and the planet carrier of the planetary gearset.

The first hollow shaft defines a first selection device provided with an actuation fork at the second end, opposite the first end.

The second hollow shaft defines a second selection device provided with an actuation fork at the second end, opposite the first end.

The actuation forks are then connected to actuation systems known per se, such as, for example, mechanical, electro-pneumatic, electro-hydraulic or electro-mechanical systems.

The second end of the first hollow shaft and the second end of the second hollow shaft are arranged in a second half-space, opposite the first half-space, defined by the lay plane.

Preferably, an idler gear is arranged between the pinion of the first electric machine and the first wheel.

According to a preferred variant of the invention that can be combined with any of the previous variants, the electric drive axle is provided with two electric machines and two transmissions interposed between the differential and the respective electric machines. The transmissions can be controlled independently of one another and can be identical or similar so as to obtain identical or different transmission ratios.

Advantageously, the drive axle can implement from two to six gears depending on the number of electric machines implemented and on whether the two transmissions are identical to each other, i.e. with wheels having identical diameters, or similar, i.e. having identical centre distances but wheels with different diameters and therefore different numbers of teeth and transmission ratios.

The dependent claims describe preferred variants of the invention, forming an integral part of the present description.

### Brief Description of the Figures

Further objects and advantages of the present invention will become apparent from the following detailed description of an embodiment thereof (and of variants thereof) and from the attached drawings given purely by way of non-limiting example, in which:
- Figure 1 shows an example of a drive axle layout according to the present invention;
- Figure 2 shows a variant of the layout of Figure 1 with two two- or four-speed transmissions and two electric machines;

- Figure 3 shows a solution based on the layout of Figure 1 in which a stepped planetary gearset with two sun gears and a fixed ring gear is implemented, allowing three transmission ratios to be obtained for each transmission;
- Figure 3a shows a magnification of a portion of Figure 3. It should also be noted that the terms "first", "second", "third", "upper", "lower" and the like may be used herein to distinguish various elements. These terms do not imply a spatial, sequential or hierarchical order for the modified elements unless specifically stated or clearly inferred from the text.

The elements and features illustrated in the different preferred embodiments, including the drawings, may be combined with one another without thereby departing from the scope of protection of the present application as described below.

### Detailed Description of Embodiments

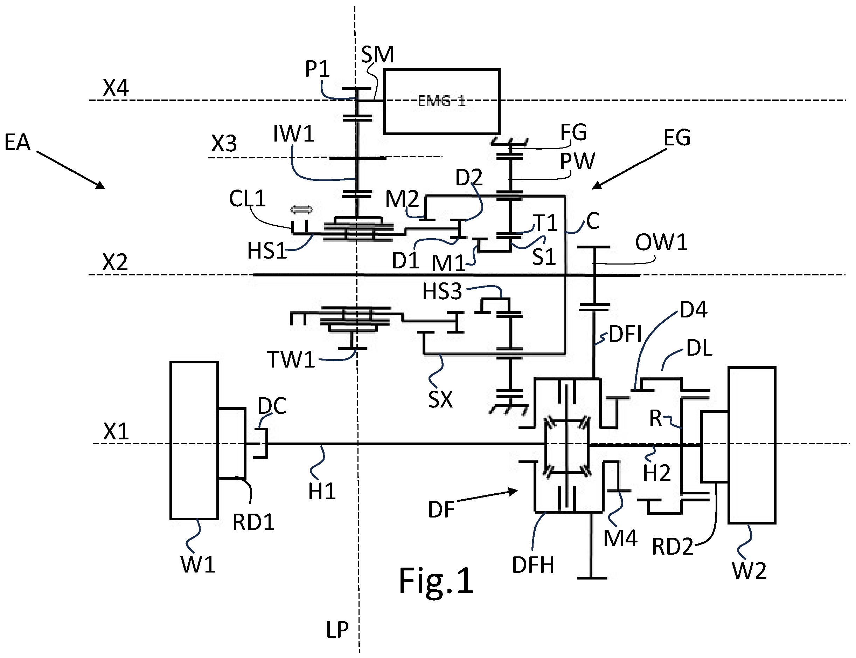

Figure 1 shows a preferred layout of the electric drive axle EA of the present invention.

The axle is defined by two half-shafts H1, H2 arranged to drive respective vehicle wheels W1, W2 in rotation.

The half-shafts are connected to the differential DF to be driven in rotation.

A planetary gearset EG, defining two inputs and one output, is arranged parallel but not coaxial with the half-shafts H1, H2. The planet carrier C is operatively connected to the differential input DFI of the differential DF and in particular is connected by means of an output wheel OW1, fixed to the planet carrier, which meshes with a ring gear DFI fixed to the differential casing DFH or formed integrally therewith.

Planets PW, preferably at least three, are mounted on the planet carrier and mesh simultaneously
- with an internally toothed ring gear FG fixed to a casing (not shown) of the electric axle EA, and
- with a first sun gear S1.

The first sun gear S1 and the planet carrier C define two distinct inputs of the planetary gearset EG and therefore two different transmission ratios.

In the planetary gearset configuration described above, by driving the sun gear in rotation, the maximum reduction ratio obtainable is achieved, determined by the combination of the number of teeth of the ring gear FG and the first sun gear S1.

The planetary gearset is arranged along axis X2, while the half-shafts define axis X1, parallel but not coaxial with axis X2.

Since the planet carrier simultaneously defines an input and the single output of the planetary gearset, this means that when the planet carrier is selected as the input, this corresponds to bypassing the planetary gearset, i.e. without any variation of the transmission ratio due to the planetary gearset itself EG, EG1, EG2 between the input speed of the planetary gearset and the output speed associated with the differential DF.

This configuration is selected in order to obtain the lowest overall reduction ratio of the transmission during vehicle travel at high speed.

The first sun gear S1 is mounted on a third hollow shaft HS3 supporting the first hub M1.

The planet carrier also defines, at least partially, a hollow shaft SX that is coaxial with and external with respect to the first and third hollow shafts HS1, HS3.

The planet carrier is fixed to a second hub M2.

The first hollow shaft HS1, coaxial with the second axis X2, has a first end selectively connectable to one of the at least two inputs of the planetary gearset. In particular, it can respectively engage the first and second hub by means of respective teeth D1, D2.

The hubs M1, M2, M3 have respective teeth, generally radial teeth.

The first hollow shaft HS1 is supported, by means of a first splined coupling, by a first toothed wheel TW1, wherein said toothed wheel is configured to be driven in rotation directly or indirectly by a pinion P1 of a first electric machine EMG1.

The first hollow shaft HS1, being axially slidable, allows its first end to selectively select one of the two inputs of the planetary gearset.

In particular, the first end comprises an internal toothing D1 configured to mesh with the first hub M1 connected to the sun gear S1, and an external toothing D2 configured to mesh with the second hub M2 connected to the planet carrier C.

A first selection device CL1 is thus provided, through which it is possible to select a first and a second transmission ratio by distributing the drive torque present at the first toothed wheel TW1 respectively to the sun gear S1 or to the planet carrier C.

Obviously, when the first hollow shaft HS1 is connected to the hub M2 associated with the planet carrier C, the planetary gearset is bypassed; therefore, shaft HS1 is connected to the differential through the sole transmission ratio provided by the output wheel OW1 meshing with the ring gear DFI fixed to the differential casing.

Conversely, a higher reduction transmission ratio is obtained when the first hollow shaft HS1 is connected to the hub M1 formed integrally with or rotationally connected to the first sun gear S1.

The first selection device CL1 is configured to also assume a neutral or idle configuration.

This neutral condition of control CL1 enables the vehicle towing function by effectively disconnecting from rotation the electric machine and all gearsets upstream of the first selection device CL1.

This neutral condition can also be exploited to enable a sailing function of the motor system and transmission gearsets by disconnecting them from rotation with respect to the wheels during vehicle travel, thereby effectively increasing the efficiency of the drive axle by reducing energy losses due to the reduced number of rotating components.

The expressions "control CL1" and "selection device CL1" are equivalent and may be used interchangeably.

The pinion P1 and the first toothed wheel TW1 define a lay plane LP, in which the first electric machine EMG1 and the planetary gearset EG are both arranged in a first half-space defined by the lay plane.

The first selection device CL1 can be actuated by means of a sleeve that, for convenience, bears the same reference symbol CL1 as the entire selection device, operable by a fork (not shown) arranged in the second half-space opposite the first half-space.

The electric machine EMG1 is arranged along a fourth axis X4 parallel but not coaxial with the first, second and third axes X1, X2 and X3.

The third axis X3 is defined by the idler gear IW1 which meshes with pinion P1 and with the first toothed wheel TW1. This idler gear is optional; if it is absent, pinion P1 meshes directly with wheel TW1.

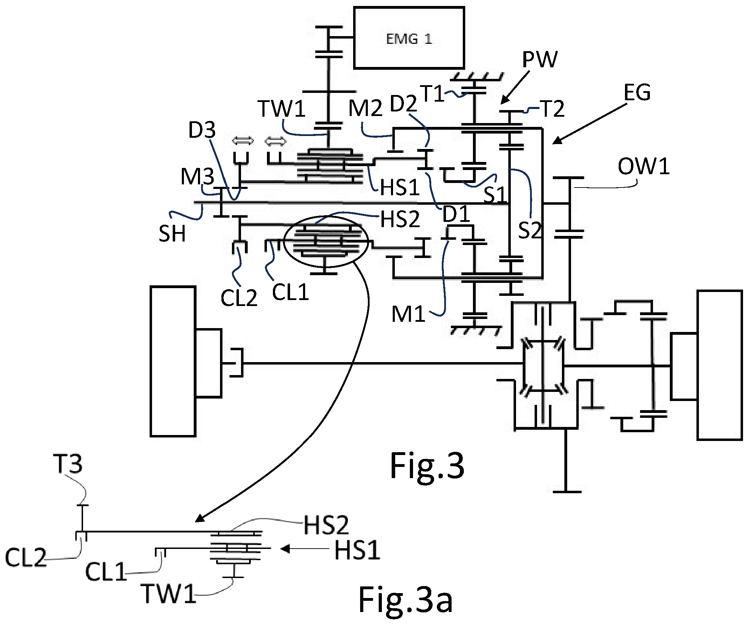

The variant of Figure 3 represents an evolution with respect to the solution of Figure 1; therefore, only the reference signs that differentiate it therefrom are shown.

The planetary gearset EG is of the stepped type, i.e. each planet PW is provided with two toothing portions T1, T2 of different diameters, fixed in rotation to each other.

The first toothing T1 of a planet PW meshes
- with the internally toothed ring gear FG fixed to the casing (not shown) of the electric axle EA, and
- with the first sun gear S1.

The second toothing T2 meshes with a second sun gear S2. The second sun gear S2 is fixed to a transmission shaft SH, internal and coaxial with the first hollow shaft HS1.

The first hollow shaft HS1, as previously described, is coupled by means of a splined coupling to the first toothed wheel TW1, allowing it to slide axially with respect to the first toothed wheel TW1, while remaining fixed thereto in rotation.

The axle comprises a second hollow shaft HS2 coupled to the first hollow shaft HS1 by means of a further splined coupling, which makes it rotationally connected but axially slidable with respect to shaft HS1, so that the second hollow shaft fits internally into the first hollow shaft. Obviously, the first hollow shaft HS1, the second hollow shaft HS2 and the transmission shaft SH are all coaxial and concentric; in particular, the second hollow shaft HS2 is intermediate between the first hollow shaft HS1 and the transmission shaft SH.

The transmission shaft SH, at a first end, supports the second sun gear S2 and, at a second end opposite the first end, is fixed to a third hub M3.

The second hollow shaft HS2 comprises a second end also arranged in the second half-space, provided with toothing D3 configured to engage the third hub M3.

The second hollow shaft HS2 is also provided with a sleeve CL2 to allow a fork to actuate it axially so as to engage the third hub M3 when the first hollow shaft HS1 is disconnected from the first hub M1 and the second hub M2. Thanks to the present variant, three different gears are available in addition to the possibility of providing a neutral or idle condition.

In particular, by actuating control device CL2, engagement of toothing D3 with hub M3 is achieved and the torque from wheel TW1 is transmitted to sun gear S2, thereby providing the maximum reduction transmission ratio of the planetary gearset EG.

By then actuating control device CL1, engagement of toothing D1 with hub M1 can be achieved, and the torque from wheel TW1 is transmitted to sun gear S1, thereby providing a lower reduction transmission ratio of the planetary gearset EG.

Finally, by further actuating control device CL1, engagement of toothing D2 with hub M2 can be achieved, thereby transferring the torque from wheel TW1 to the planet carrier C and thus to wheel OW1, providing a 1:1 transmission ratio, i.e. without any speed reduction due to the planetary gearset EG.

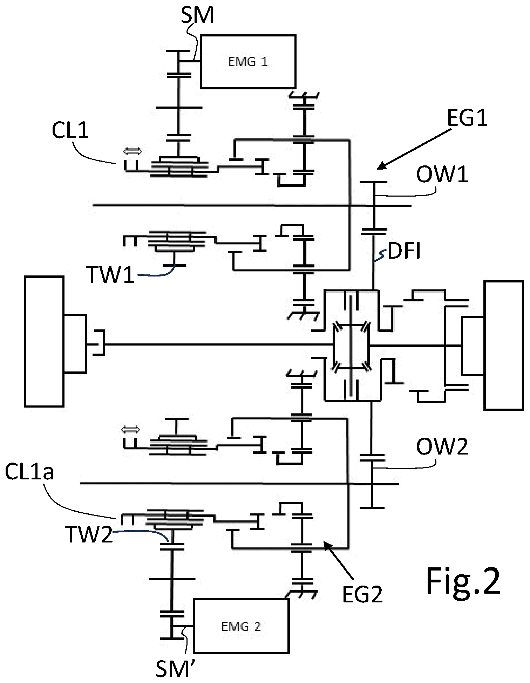

Similarly to Figure 2, the variant of Figure 3 can also be implemented with two electric machines and a respective planetary gearset for connecting the second electric machine to the differential.

In this case, from three to six different gears can be realised by exploiting the presence of two stepped planetary gearsets.

Preferably, the differential DF is provided with a locking device DL capable of preventing different rotational speeds of the two half-shafts carried by the differential, making the half-shafts rigid with the differential casing itself, thus providing the differential locking function used when one of the two wheels is in a low-adhesion condition, for example due to ice or mud, etc., to transmit torque also to the opposite wheel with adhesion and thus allow the vehicle to regain traction.

The differential lock DL can comprise, for example, a sliding sleeve coupled to a hub R by means of a splined coupling, wherein the hub is fixed to half-shaft H2. The sleeve is provided with toothing D4 configured to reversibly mesh with a hub M4 fixed to the differential casing DFH.

The pinion P1 of the first electric machine preferably drives the first wheel TW1 in rotation by means of an idler gear IW1 which meshes both with pinion P1 and with the first wheel TW1, thereby providing a first transmission ratio.

According to another preferred aspect of the invention, one of the half-shafts H1, H2 may be provided with a disconnectable joint DC, so as to disconnect the axle EG in the event of towing of the respective vehicle.

According to a further aspect of the invention combinable with any of the previously described variants, each half-shaft may be provided with a reduction gear RD1, RD2 arranged close to the respective wheels W1, W2, of the planetary type known in the art as a wheel-hub reducer or "hub reducer".

According to the present invention, advantageously, the planetary gearset configured at its maximum reduction ratio is used as a first gear in combination with the first reduction provided by the coupling of the wheel TW1 and pinion P1 having the highest reduction ratio, to obtain the maximum overall reduction ratio when the vehicle is stationary or almost stationary, thereby providing high drive torque at the wheels at vehicle start-off. Conversely, at highway speeds, the planetary gearset is bypassed, since the torque passes directly through the planet carrier, significantly reducing losses due to the number of toothed wheels meshing with each other, defining the gear with the lowest reduction ratio, since speed is reduced only by the ratio existing between pinion P1 and the first toothed wheel TW1 and between wheel OW1 and wheel DFI.

The solution with the stepped planetary gearset is further advantageous in that, thanks to the second sun gear, a further reduction of the transmission ratio can be achieved, providing a kind of reduced first gear.

With reference to Figure 2, the axle can be of the dual-electric-motor and symmetric type, meaning that the second electric machine EMG2 is connected to the common differential DIF by means of a second planetary gearset EG2 identical or similar to the first planetary gearset EG1 associated with the first electric machine EMG1.

It is worth noting that a differentiation between the transmission ratios achievable by the transmissions of the first electric machine and the second electric machine can be obtained by varying the diameter of wheel OW2, fixed to the planet carrier of the second planetary gearset EG2, with respect to wheel OW1 fixed to the planet carrier of the first planetary gearset EG1.

Another way to vary the transmission ratios achievable by the two transmissions is to vary the ratio between the first toothed wheels TW1 and TW2 of the respective first and second transmission.

Moreover, the centre distances between the wheels, the electric machines and the differential may be identical or different between the two branches.

Obviously, it is possible to operate both electric machines so as to carry out successive gear changes, ensuring drive torque to the differential during the gear changes in the two transmission branches, thereby implementing the function commonly referred to as "hidden shift", provided that intervention occurs only between controls CL1 and CL2 in an alternating and non-simultaneous manner.

If the selection devices are instead of the clutch type, a continuous torque value available at the wheels and thus to vehicle traction during successive gear changes carried out by the same or by both electric machines can be ensured, thereby implementing the function commonly referred to as "power shift".

Figure 2 shows the two selection devices CL1 and CL1a respectively of the first and second transmission which, as described above, can be selectively controlled.

The hubs M1, M2 and M3 may also be identified as the input ports of the planetary gearsets EG.

It is worth noting that, for brevity of the present disclosure, not all features common to the previously described variants have been referred to for all variants, as they can be directly inferred from comparison of the attached drawings.

Likewise, the two electric machines may be the same or different from one another in terms of torque/power, type and overall dimensions.

Furthermore, an energy regeneration function may be implemented by recovering kinetic energy during braking by operating the electric machine as an electric power generator; the amount of recoverable energy can be modulated both by controlling the electric machines and by controlling their mechanical connection to the differential by means of the selection devices CL1, CL2.

A sailing function may also be implemented, which provides for the disconnection during vehicle travel of the first selection device upon release of the accelerator pedal of both electric machines, thereby reducing mechanical losses due to dragging of the transmission components.

Finally, a vehicle towing function may be implemented, in which both electric machines are disconnected from the differential, thus permitting easier towing of the vehicle without rotation of the electric machines and with a reduced number of transmission components in rotation.

By disconnecting only one of the electric machines, it is also possible to implement a traction continuity function with one motor in failure, towing the vehicle with the remaining motor, which may be particularly advantageous in military or rescue vehicles.

Variations of the non-limiting embodiment described are possible without thereby departing from the scope of protection of the present invention, encompassing all embodiments equivalent for a person skilled in the art to the content of the claims.

From the above description, the person skilled in the art is able to implement the subject-matter of the invention without introducing further constructional details.

## Claims

1. Electric axle (EA) for industrial or commercial vehicle comprising
- a differential (DF) equipped with an input port (DFI) and half-shafts (H1, H2) to drive in rotation respective vehicle wheels (W1, W2),
- a first electric machine (EMG1, EMG2) having a drive shaft (SM, SM'),
- a first transmission comprising:
+ an epicyclic gear train (EG, EG1, EG2) parallel but not coaxial with said half-shafts (H1, H2) and comprising
. a single output port (OW1, OW2) operatively connected to said differential input port (DFI),
. a first input port (M1) and a second input port (M2) selectively connectable with
+ a first hollow shaft (HS1), parallel but not coaxial with said half-shafts,
wherein the first hollow shaft (HS1) is supported by and fixed in rotation with a first gear wheel (TW1, TW2) by means of a first splined coupling, wherein the first gear wheel is directly or indirectly coupled to said first electrical machine (EMG1, EMG2) drive shaft (SM, SM') and wherein said first hollow shaft is configured to selectively couple to said first and second input ports (M1, M2) by means of an axial shifting permitted by said first splined coupling.

2. Axle according to claim 1, wherein said first gear wheel (TW1) together with a pinion (P1, P2) of the first electric machine (EMG1, EMG2) drive shaft (SM, SM') identifies a reference plane (LP) in which the first electric machine (EMG1) and the epicyclic gear train (EG, EG1, EG2) are both arranged in a first half-space identified by the reference plane (LP).

3. Axle according to claim 2, wherein a control fork of said first hollow shaft (HS1) is arranged in a second half-space, opposite to the first half-space, with respect to the reference plane (LP).

4. Axle according to claim 2 or 3, wherein the differential is arranged in said first half-space.

5. Axle according to one of the preceding claims 1 - 4, wherein said pinion (P1) meshes directly with said first gear wheel or indirectly through an idle gear (IW1).

6. Axle according to any of the preceding claims 1 - 4, wherein said pinion (P1) meshes indirectly with said first gear wheel through an idle gear (IW1), wherein the electric axle identifies a first axis (X1), the epicyclic gear train identifies a second axis (X2), the idle gear (IW1) identifies a third axis (X3) and wherein the drive shaft (SM, SM') identifies a fourth axis (X4), wherein said first, second, third and fourth axles are parallel and not coaxial to each other.

7. Axle according to any of the preceding claims, wherein said single output port of the epicyclic gear train is defined by an output toothed wheel (OW1) that meshes with a crown (DFI) defining the input port of the differential (DF).

8. Axle according to any of the preceding claims, wherein said epicyclic gear train (EG, EG1, EG2) comprises at least one satellite (PW) comprising a first set of teeth (T1) that meshes simultaneously with a first sun gear (S1), defining said first input port, and with a fixed crown (FG) integral with an axle drive casing (EA).

9. Axle according to claim 8, wherein each satellite (PW) comprises said first set of teeth (T1) and a second set of teeth (T2), fixed to each other, of which the second set of teeth engages with a second sun gear (S2) defining a third input port (M3) of the epicyclic gear train, and wherein the axle (EA) comprises a second coaxial hollow shaft (HS2), internal to said first hollow shaft (HS1), coupled to the first hollow shaft by means of a second splined coupling and wherein the second splined shaft (HS2) is able to couple with said third input port alternatively to a coupling of the first hollow shaft with said first and second input ports.

10. Axle according to claim 9, wherein the first sun gear (S1) is fixed with a first hub (M1) and the planet carrier (C) is fixed with a second hub (M2) and wherein the first hollow shaft comprises two respective toothings (D1, D2) suitable for selectively engaging said first and said second hub (M1, M2).

11. Axle according to claim 9 or 10, wherein said second sun gear (S2) is fixed with a transmission shaft (SH) coaxial with said first and second hollow shafts (HS1, HS2), wherein the transmission shaft supports a third hub (M3) and the second hollow shaft (HS2) has a third toothing (D3) suitable for engaging said third hub (M3).

12. An axle according to claim 11, wherein said first and second hubs are disposed in said first half-space and said third hub is disposed in said second half-space.

13. An axle according to claim 12, wherein control forks of said first and second hollow shafts are disposed in said second half-space.

14. Axle according to any of the preceding claims, comprising said first electric machine (EMG1) is operatively connected to the differential (DF) by means of said first transmission and further comprising a second electric machine (EMG2) operatively connected to the differential by means of a second transmission similar or identical to said first transmission.

15. Axle according to any of the preceding claims, wherein each half-shaft (H1, H2) comprises a wheel hub type speed reducer (RD1, RD2).

16. Axle according to any of the preceding claims, wherein the differential comprises locking means (DL) of the differential (DF).

17. Axle according to any of the preceding claims, wherein a half-shaft (H1) comprises disconnection means (DC) adapted to disconnect the rotation of the transmission components with respect to the rotation of the vehicle wheels (W1, W2).

18. Industrial or commercial vehicle comprising an electric axle according to any of claims 1 - 17.
